# EUROPÄISCHE PATENTANMELDUNG

(11) **EP 4 451 515 A1**
(43) Veröffentlichungstag der Anmeldung: **23.10.2024**
(21) Anmeldenummer: 23189230.8
(22) Anmeldetag: 02.08.2023
(51) Int. Cl.: H02J 50/12, H02J 50/80

(54) **DRAHTLOSE ENERGIEÜBERTRAGUNG**

(30) Priorität: 20.04.2023 EP 23168841
(71) Anmelder: Georg Fischer Rohrleitungssysteme AG, 8201 Schaffhausen (CH)
(72) Erfinder: Hufschmid, Elmar, 79774 Albbruck (DE); Selvaggi, Yuri, 8057 Zürich (CH); Signer, Reto, 8623 Wetzikon (CH); Bleuler, Andy, 5621 Zufikon (CH); Hartmann, Thomas, 88212 Ravensburg (DE); Ciobanu, Calin, Brea, CA 92821 (US)
(74) Vertreter: Fenner, Seraina

(57) **Zusammenfassung**

Verfahren zur optimierten drahtlosen Energieübertragung zwischen zwei Spulen, durch
• Übertragen von Energie einer Spule einer Primärseite an eine Spule auf einer Sekundärseite, beinhaltend die Schritte:
• Bestimmen einer gemeinsamen Resonanzfrequenz der Primär-und Sekundärseite durch,
• Messen der Leistungsaufnahme der Sekundärseite,
• Übermitteln der Messwerte der Leistungsaufnahme der Sekundärseite an die Primärseite,
• Ermitteln und Verschieben der Resonanzfrequenz auf der Primärseite für eine verbesserte gemeinsame Resonanzfrequenz aufgrund der übermittelten Messwerte der Leistungsaufnahme der Sekundärseite an die Primärseite, oder aufgrund der höchsten Effizienz der Energieübertragung zwischen der Primär- und der Sekundärspule,
• wobei das Messen und Übermitteln der Messwerte der Leistungsaufnahme sowie das Ermitteln und Verschieben der Resonanzfrequenz der Primärseite ein sich wiederholender Vorgang bildet und dadurch eine kontinuierliche Anpassung und Verbesserung der Resonanzfrequenz der Primärseite erfolgt

## Beschreibung

Die Erfindung betrifft ein Verfahren zur optimierten drahtlosen Energieübertragung zwischen zwei Spulen, durch Übertragen von Energie einer Spule einer Primärseite an eine Spule auf einer Sekundärseite.

Der Wirkungsgrad der Leistungsübertragung bei einer induktiven Energieübertragung von der Primärseite auf die Sekundärseite wird durch den Betrieb in der Resonanzfrequenz erheblich gesteigert. Die Resonanzfrequenz, bei der der höchste Wirkungsgrad der Energieübertragung erreicht wird, wird durch die Komponenten der Primär- und Sekundärseite bestimmt. Faktoren, die auf die Komponenten einwirken, die somit auch die Resonanzfrequenz beeinflussen und sich konstant verändern, welche unteranderem sind Alterung, die Temperatur, die Qualität der Komponenten sowie die Durchlässigkeit bzw. die dielektrische Leitfähigkeit aufgrund des Staubs oder Schmutzes, sind ebenfalls zu berücksichtigen.

Es ist Aufgabe der Erfindung ein Verfahren vorzuschlagen, bei dem die sich konstant verändernde Resonanzfrequenz der Spulen dynamisch und kontinuierlich ermittelt und angepasst wird um stets den bestmöglichsten Wirkungsgrad zur Energieübertragung von der Primärseite auf die Sekundärseite zu erreichen.

Diese Aufgabe wird erfindungsgemäss dadurch gelöst, dass eine gemeinsame Resonanzfrequenz der Primär-und Sekundärseite bestimmt wird, durch
- ein Messen der Leistungsaufnahme der Sekundärseite,
- ein Übermitteln der Messwerte der Leistungsaufnahme der Sekundärseite an die Primärseite,
- ein Ermitteln und Verschieben der Resonanzfrequenz auf der Primärseite für eine verbesserte bzw. optimierte gemeinsame Resonanzfrequenz aufgrund der übermittelten Messwerte der Leistungsaufnahme an die Primärseite, oder aufgrund der momentan höchsten Effizienz bzw. des höchsten Wirkungsgrads zur Energieübertragung zwischen der Primär- und Sekundärspule,
- wobei das Messen und Übermitteln der Messwerte der Leistungsaufnahme sowie das Ermitteln und Verschieben der Resonanzfrequenz der Primärseite ein sich stetig wiederholender Vorgang bildet und dadurch eine kontinuierliche Anpassung und Verbesserung der Resonanzfrequenz der Primärseite erfolgt.

Zudem wird die erfindungsgemässe Aufgabe auch dadurch gelöst, dass die Sekundärseite automatisch auf die Primärseite abgestimmt wird, durch
- ein Ermitteln und Bestimmen einer optimalen Resonanzfrequenz der Primärseite durch,
- ein Messen der Leistungsaufnahme der Primärseite bei unterschiedlichen Frequenzen,
- ein Verschieben der Resonanzfrequenz der Primärseite auf diejenige Frequenz , bei der die maximale Last bzw. Leistungsaufnahme gemessen wird,
- wobei das Ermitteln und Bestimmen einer optimalen Resonanzfrequenz und das Verschieben der Resonanzfrequenz ein sich stetig widerholender Vorgang bildet und dadurch eine kontinuierliche Anpassung und Verbesserung der Resonanzfrequenz der Primärseite erfolgt,
- Messen der Leistungsaufnahme der Sekundärseite,
- Abstimmen der Resonanzfrequenz der Sekundärseite auf die Resonanzfrequenz der Primärseite mittels eines sekundärseitigen Abstimmungsvorgangs, wobei der sekundärseitige Resonanzkreis an die Resonanzfrequenz der Primärseite angeglichen bzw. anpasst wird.

Das erfindungsgemässe Verfahren zur optimierten drahtlosen Energieübertragung zwischen zwei Spulen, durch Übertragen von Energie einer Spule einer Primärseite an eine Spule auf einer Sekundärseite, beinhaltet die folgenden Schritte: Um einen bestmöglichen Wirkungsgrad bzw. höchstmögliche Effizienz bei der Energieübertragung zu erzielen, erfolgt ein Bestimmen einer gemeinsamen Resonanzfrequenz der Primär- und Sekundärseite, Dies wird dadurch erreicht, dass ein Messen der Leistungsaufnahme der Primär- und Sekundärseite bei unterschiedlichen Frequenzen erfolgt, vorzugsweise mittels einer Strom- und Spannungsmessung. Vorzugsweise werden bei der Leistungsmessung die Leistung im Mittel- oder Effektivwert und/oder die Leistungsspitzen erfasst.

Die erfassten Messwerte der Leistungsaufnahme der Sekundärseite werden an die Primärseite übermittelt.

Auf der Primärseite erfolgt ein Ermitteln und Verschieben der Resonanzfrequenz für eine verbesserte gemeinsame Resonanzfrequenz aufgrund der übermittelten Messwerte der Leistungsaufnahmen an der Primär- und Sekundärseite oder der Leistungsaufnahme der Sekundärseite. Vorzugsweise wird dies durch ein MCU (Micro Control Unit) ermittelt.
Vorzugsweise wird um die optimale gemeinsame Resonanzfrequenz der Primäre-und Sekundärspule zu ermitteln, ermittelt bei welcher Frequenz die Energieübertragung zwischen den beiden Spulen am effizientesten ist bzw. den höchsten Wirkungsgrad aufweist, was aufgrund der Messwerte der Primäre-und Sekundärspule erfolgt.
Alternativ kann die Frequenz der Primärspule auf die Frequenz entsprechend der Messung der Leistungsaufnahme der Sekundärseite verschoben werden, die dann als gemeinsame Resonanzfrequenz zur optimalen Energieübertragung dient.

Das Messen und Übermitteln der Messwerte der Leistungsaufnahmen sowie das Ermitteln und Verschieben der Resonanzfrequenz der Primärseite in Abhängigkeit von den übermittelten Messwerten der Sekundärseite oder der Primär- und Sekundärseite ist ein sich wiederholender Vorgang wodurch eine kontinuierliche Anpassung und Verbesserung der Resonanzfrequenz der Primärseite erfolgt.

Das erfindungsgemässe Verfahren zur optimierten drahtlosen Energieübertragung zwischen zwei Spulen, durch Übertragen von Energie einer Spule einer Primärseite an eine Spule auf einer Sekundärseite, beinhaltend folgenden Schritte: Ein Ermitteln und Bestimmen einer optimalen Resonanzfrequenz der Primärseite durch ein Messen der Leistungsaufnahme der Primärseite bei unterschiedlichen Frequenzen. Anschliessend erfolgt ein Verschieben der Resonanzfrequenz der Primärseite auf die Frequenz der gemessenen unterschiedlichen Frequenzen, bei der die maximale Last gemessen wird. Wobei das Ermitteln und Bestimmen einer optimalen Resonanzfrequenz und das Verschieben der Resonanzfrequenz ein sich widerholender Vorgang ist und dadurch eine kontinuierliche Anpassung und Verbesserung der Resonanzfrequenz der Primärseite erfolgt. Zudem erfolgt ein Messen der Leistungsaufnahme der Sekundärseite in Bezug auf die Frequenz. Um einen bestmöglichen Wirkungsgrad zu erzielen wir die Resonanzfrequenz der Sekundärseite auf die Resonanzfrequenz der Primärseite mittels eines sekundärseitigen Abstimmungsvorgangs abgestimmt. Dazu wird der sekundärseitige Resonanzkreis aufgrund der Resonanzfrequenz der Primärseite beeinflusst bzw. anpasst wird.

Eine bevorzugte Ausführungsform des Verfahrens besteht darin, dass die übermittelten Messwerte der Leistungsaufnahme vorzugsweise der Sekundärseite über eine separat von der Spule unabhängige Schnittstelle kontaktlos vorzugsweise an die Primärseite übermittelt werden. Es ist vorteilhaft wenn die Messwerte der Leistungsaufnahme der Sekundärseite in Bezug auf die Frequenz über eine separate unabhängige Schnittstelle an die Primärseite übermittelt werden. Vorzugsweise ist die separate Schnittstelle für eine bidirektionale Datenübertagung ausgebildet. Dadurch wird auch eine Datenübermittlung von der Primärseite auf die Sekundärseite ermöglicht und ebenfalls bei Bedarf Messwerte, Einstellungen, Vorgaben wie auch Rückmeldungen ausgetauschte werden können.

Als vorteilhaft hat sich gezeigt, wenn das erfindungsgemässe Verfahren zur drahtlosen Energieübertragung in Spulen für den Betrieb eines Sensors, Aktuators und/oder Controllers eingesetzt wird. Dadurch kann zum Beispiel ein Sensor einfach mit einem Prüfkopf oder Transmitter verbunden werden da eine drahtlose Energiesowie auch Datenübertragung ermöglicht wird. Auch im Bereich von Aktuatoren und Controllern ist eine drahtlose Energieübertragung, welche einen hohen Wirkungsgrad aufweist durchaus wertvoll.

Es ist vorteilhaft, wenn zum Ermitteln der optimalen Resonanzfrequenz zur Energieübertragung eine MCU (Micro Control Unit) kontinuierlich auf unterschiedliche Frequenzen umschaltet und die Lasten in Bezug auf die Frequenzen ermittelt. Daraus ergibt sich bei welcher Frequenz die höchste Last bzw. Leistungsaufnahme möglich ist. Da sich die Resonanzfrequenz kontinuierlich verändern kann erfolgt diese Ermittlung vorzugsweise ebenfalls fortlaufend bzw. wiederholt sich. Das Ermitteln der Resonanzfrequenz kann auf der Primärseite wie auch auf der Sekundärseite erfolgen.

Es ist vorteilhaft, wenn jeweils eine MCU auf der Primärseite und eine weitre MCU auf der Sekundärseite angeordnet ist und jeweils diese Seite kontrolliert und regelt.

Vorzugsweise wird zur Ermittlung der optimalen Resonanzfrequenz eine MCU kontinuierlich auf mindestens drei unterschiedliche Frequenzen umschalten und dies bei jedem Durchlauf zur Ermittlung einer gemeinsamen Resonanzfrequenz. Bei jeder der Frequenzen wird dann die Leistungsaufnahme der Spule ermittelt, wodurch ersichtlich ist bei welcher Frequenz die höchste Leistungsaufnahme erfolgt.

Als vorteilhaft hat sich gezeigt, wenn die Frequenz auf diejenige Frequenz verschoben wird, bei der eine maximale Last bzw. Leistungsaufnahme gemessen wird (Resonanzfrequenz). Dadurch wird ein hoher Wirkungsgrad der Energieübertragung gewährleistet.

Gemäss einer bevorzugten Ausführungsform schaltet das erfindungsgemässe Verfahren zwischen mindestens drei unterschiedlichen Frequenzen zur Ermittlung der optimalen Resonanzfrequenz um. Als vorteilhaft hat sich gezeigt, wenn die drei unterschiedlichen Frequenzen durch die momentane Frequenz, die momentane Frequenz plus eine Delta-Frequenzveränderung und die momentane Frequenz minus eine Delta-Frequenzveränderung gebildet werden.

Es ist vorteilhaft, wenn der Wert der Delta-Frequenzveränderung pro Ermittlung gleich gross ist und einem als negativer und einmal als positiver Wert, ausgehend von der momentanen Frequenz verrechnet wird.

Vorzugsweise wird das Delta der Frequenzänderung dynamisch bestimmt. Das heisst, wenn die drei Frequenzen mit einem ersten, was einem kleinstmöglichen Delta entspricht, keinen Unterschied in der Leistungsaufnahme zeigen wird das Delta vergrössert und ein erneutes Ermitteln der Resonanzfrequenz wird durchgeführt. Bei jeder erneuten Ermittlung der Resonanzfrequenz wir das Delta auf den kleinstmöglichen Schritt zurückgesetzt. Auf diese Weise wird der Bereich der Frequenzänderung dynamisch an die jeweiligen Bedingungen, Komponenten zu bestimmten Zeitpunkten und den Faktoren die sie beeinflussen, angepasst. Das Derating kann zu verschiedenen Zeitpunkten auch unterschiedliche Geschwindigkeiten aufweisen, die z. B. bei einem kleinen Delta keine Leistungsveränderung anzeigen oder bei einem grossen Delta eine zu grobe Anpassung verursachen. Durch die oben erwähnte Art der Bereichsauswahl der Frequenzen wird immer bei der kleinstmöglichen begonnen, wodurch zu grobe Anpassungen der Frequenz vermieden werden können.

Als vorteilhaft hat sich gezeigt, wenn der sekundärseitige Abstimmungsvorgang mittels eines durch eine MCU gesteuerten sekundärseitig angeordneten AFEs (Analog Front End) erfolgt. Dadurch wird erreicht, dass sich die Resonanzfrequenz sekundärseitig auf die primärseitige Resonanzfrequenz abstimmen lässt. Durch in der AFE angeordnete Elemente, welche durch die MCU kontrolliert und geregelt werden, wird der sekundäre Resonanzkreis auf die primärseitige Resonanzfrequenz angepasst.
Vorzugsweise regelt eine MCU einen digital einstellbaren Widerstand, einen digital einstellbaren Kondensator, und/oder analoge Schalter mit Widerständen und/oder Kondensatoren eines sekundärseitig angeordneten AFEs. Dadurch wird erreicht, dass der Resonanzkreis sekundärseitig in dem Frequenzbereich der ermittelten Resonanzfrequenz primärseitig liegt.

Alle Ausgestaltungmöglichkeiten sind untereinander frei kombinierbar.

Ausführungsbeispiele der Erfindung werden anhand der Figuren beschrieben, wobei sich die Erfindung nicht nur auf die Ausführungsbeispiele beschränkt. Es zeigen:
- Fig. 1: ein Schema zum erfindungsgemässen Verfahren bei der die Leistungsmessung der Sekundärseite an die Primärseite übertragen wird und
- Fig. 2: ein Schema zum erfindungsgemässen Verfahren bei dem sich die Sekundärseite auf die Resonanzfrequenz der Primärseite einstellt.

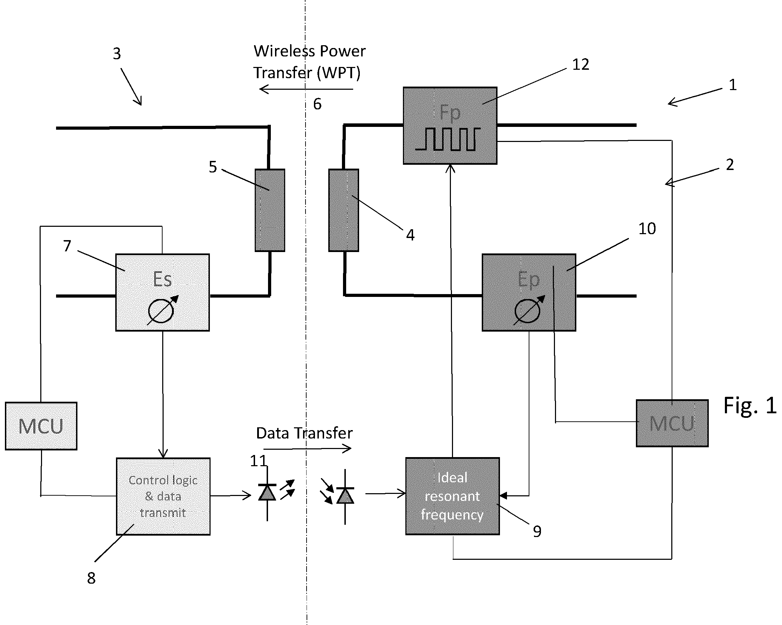

Das in Fig. 1 dargestellte Schema zeigt das erfindungsgemässe Verfahren zur optimierten drahtlosen Energieübertragung zwischen zwei Spulen 4, 5. Die Energieübertragung 6 erfolgt von der Spule 4 der Primärseite 2 auf die Spule 5 der Sekundärseite 3. Um einen möglichst hohen Wirkungsgrad bei der Energieübertragung 6 zu erzielen wird eine gemeinsame Resonanzfrequenz zur Energieübertragung der beiden Spulen 4, 5 bestimmt. Dazu wird die Leistungsaufnahme 7 der Sekundärseite abhängig von der vorherrschenden Frequenz erfasst. Die erfassten Messwerte 8 werden dann an die Primärseite 2 übermittelt. Auf der Primärseite 2 wird mit den aus der Primärseite 2 ermittelten Frequenzen, der Leistungsaufnahme und den übermittelten Messwerten 8 der Sekundärseite 3 eine optimale gemeinsame Resonanzfrequenz ermittelt 9. Entweder durch die Anpassung der Primärseite 2 aufgrund der Messwerte der Leistungsaufnahme Sekundärseite 3 oder aufgrund der ermittelten Effizienz der Energieübertragung zwischen der Primär-und Sekundärspule aufgrund der Messwerte der Primär- und Sekundärseite.
Dieser Vorgang wird konstant wiederholt, dadurch wird die gemeinsame Resonanzfrequenz fortlaufend angepasst, da sich die optimale Resonanzfrequenz kontinuierlich verändert aufgrund der Veränderung der Komponenten bzw. der Einwirkung der Faktoren auf die Komponenten. Es ist vorteilhaft, wenn die Übermittlung der Messwerte der Leistungsaufnahme 8 der Sekundärseite 3 über einen separat von den Spulen 4, 5 unabhängig kontaktlose Datenschnittstelle 11 verläuft. Des Weiteren hat es sich auch als vorteilhaft gezeigt, dass zum Ermitteln der optimalen Resonanzfrequenz eine MCU kontinuierlich, vorzugsweise zwischen drei Frequenzen auf der Primärseite 2 umschaltet 12 und unter denen die Frequenz mit der höchsten Leistungsaufnahme als Resonanzfrequenz ermittelt bzw. die Resonanzfrequenz drauf verschiebt. Wobei die von der Sekundärseite 3 übermittelten Messwerte bezüglich der Leistungsaufnehme 7 die Frequenzen der Primärseite 2 beeinflussen.

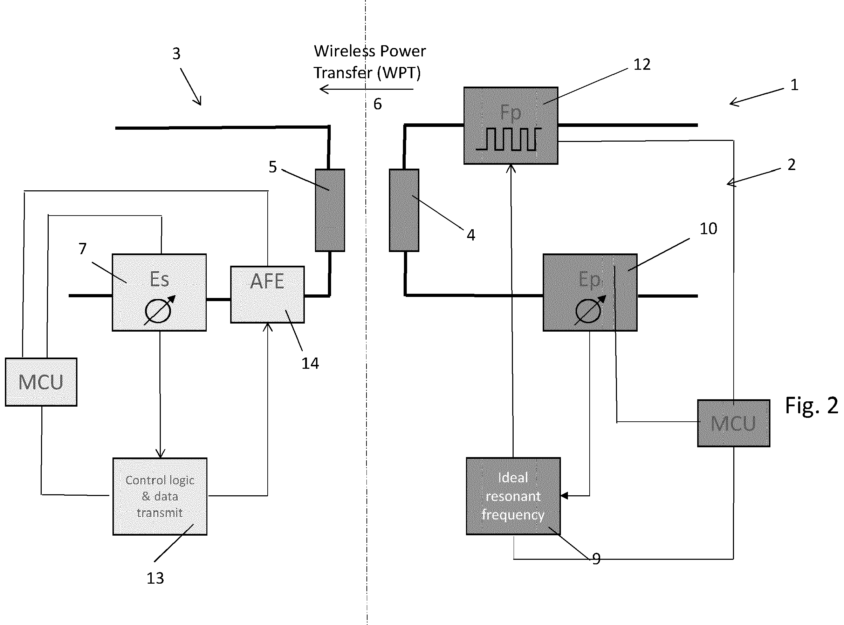

Fig. 2 zeigt ein weiteres Schema des erfindungsgemässen Verfahrens zur optimierten drahtlosen Energieübertragung zwischen zwei Spulen 4, 5. Die Energieübertragung 6 erfolgt ebenfalls von der Spule 4 der Primärseite 2 auf die Spule 5 der Sekundärseite 3. Um auch hier einen möglichst hohen Wirkungsgrad bei der Energieübertragung 6 zu erzielen wird eine gemeinsame Resonanzfrequenz zur Energieübertragung der beiden Spulen 4, 5 bestimmt. Im Gegensatz zum Verfahren bzw. Schema in Fig. 1, wo die optimale Resonanzfrequenz aufgrund Rückmeldungen der Sekundärseite 3 durch die Primärseite 2 gesucht wird, wird in der weiteren Ausführungsform des Verfahrens, die in Fig. 2 dargestellt ist, die Sekundärseite 3 automatisch auf die Primärseite 2 abgestimmt. Hierzu erfolgt ein Messen der Leistungsaufnahme 10 primärseitig, bei vorzugsweise drei unterschiedlichen Frequenzen woraufhin ein Verschieben der Resonanzfrequenz auf die Frequenz mit der höchsten Leistungsaufnahme erfolgt. Sekundärseitig 3 erfolgt eine Leistungsmessung 7. Daraufhin erfolgt ein Abstimmen der Resonanzfrequenz der Sekundärseite 3 mittels eine Abstimmvorgangs 13, wobei der Resonanzkreis der Sekundärseite 3 an die Resonanzfrequenz der Primärseite 2 angepasst wird. Es ist vorteilhaft, wenn ein AFE (Analog Front End) 14 auf der Sekundärseite 3 angeordnet ist das mittels einer MCU geregelt wird und entsprechend den sekundären Resonanzkreis regelt bzw. einen digital einstellbaren Widerstand, einen digital einstellbaren Kondensator und/oder einen analogen Schalter mit Widerständen und/oder Kondensatoren einer AFE regelt. Dadurch passt sich die Sekundärseite automatisch an die primärseitige Resonanzfrequenz an. Wobei primär- wie auch sekundärseitig den bereits erwähnten Verfahrensschritt des Ermitteln der Resonanzfrequenz aufgrund der höchsten Leistungsaufnahme aus mindestens drei Frequenzen erfolgt

### Bezugszeichenliste

- 1: Schema Wireless Power Transformet (WPT)
- 2: Primärseite
- 3: Sekundärseite
- 4: Spule Primärseite
- 5: Spule Sekundärseite
- 6: Energieübertragung
- 7: Messen Leistungsaufnahme bzw. Last Sekundärseite
- 8: Erfassen und Übermitteln der Messwerte
- 9: Ermitteln der optimalen Resonanzfrequenz
- 10: Messen Leistungsaufnahme bzw. Last Primärseite
- 11: Kontaklose Schnittstelle / Datenübermittlung
- 12: Frequenzkontrolle
- 13: Abstimmungsvorgang
- 14: AFE (Analog Front End)

## Patentansprüche

1. Verfahren zur optimierten drahtlosen Energieübertragung zwischen zwei Spulen, durch
• Übertragen von Energie einer Spule einer Primärseite an eine Spule auf einer Sekundärseite, beinhaltend die Schritte:
• Bestimmen einer gemeinsamen Resonanzfrequenz der Primär-und Sekundärseite durch,
• Messen der Leistungsaufnahme der Sekundärseite,
• Übermitteln der Messwerte der Leistungsaufnahme der Sekundärseite an die Primärseite,
• Ermitteln und Verschieben der Resonanzfrequenz auf der Primärseite für eine verbesserte gemeinsame Resonanzfrequenz aufgrund der übermittelten Messwerte der Leistungsaufnahme der Sekundärseite an die Primärseite, oder aufgrund der höchsten Effizienz der Energieübertragung zwischen der Primär- und der Sekundärspule,
• wobei das Messen und Übermitteln der Messwerte der Leistungsaufnahme sowie das Ermitteln und Verschieben der Resonanzfrequenz der Primärseite ein sich wiederholender Vorgang bildet und dadurch eine kontinuierliche Anpassung und Verbesserung der Resonanzfrequenz der Primärseite erfolgt

2. Verfahren zur optimierten drahtlosen Energieübertragung zwischen zwei Spulen, durch
• Übertragen von Energie einer Spule einer Primärseite an eine Spule auf einer Sekundärseite, beinhaltend die Schritte:
• Ermitteln und Bestimmen einer optimalen Resonanzfrequenz der Primärseite durch,
• Messen der Leistungsaufnahme der Primärseite bei unterschiedlichen Frequenzen,
• Verschieben der Resonanzfrequenz der Primärseite auf diejenige Frequenz bei der die maximale Leistungsaufnahme gemessen wird,
• Wobei das Ermitteln und Bestimmen einer optimalen Resonanzfrequenz und das Verschieben der Resonanzfrequenz ein sich widerholender Vorgang bildet und dadurch eine kontinuierliche Anpassung und Verbesserung der Resonanzfrequenz der Primärseite erfolgt,
• Messen der Leistungsaufnahme der Sekundärseite,
• Abstimmen der Resonanzfrequenz der Sekundärseite auf die Resonanzfrequenz der Primärseite mittels eines sekundärseitigen Abstimmungsvorgangs, wobei der sekundärseitige Resonanzkreis an die Resonanzfrequenz der Primärseite anpasst wird.

3. Verfahren nach Anspruch 1, **dadurch gekennzeichnet, dass** die übermittelten Messwerte der Leistungsaufnahme über einen separat von der Spule unabhängige Schnittstelle kontaktlos an die Primärseite übermittelt werden.

4. Verfahren gemäss einem der Ansprüche 1 bis 3, **dadurch gekennzeichnet, dass** das Verfahren zur drahtlosen Energieübertragung in Spulen für den Betrieb eines Sensors, Aktuators und/oder Controllers eingesetzt wird.

5. Verfahren nach einem der Ansprüche 1 bis 4, **dadurch gekennzeichnet, dass** zur Ermittlung der optimalen Resonanzfrequenz eine MCU (Mico Control Unit) kontinuierlich auf unterschiedliche Frequenzen umschaltet und die Last ermittelt.

6. Verfahren nach einem der Ansprüche 1 bis 5, **dadurch gekennzeichnet, dass** zur Ermittlung der optimalen Resonanzfrequenz eine MCU kontinuierlich auf mindestens drei unterschiedliche Frequenzen umschaltet.

7. Verfahren nach einem der Ansprüche 1 bis 6, **dadurch gekennzeichnet, dass** die Resonanzfrequenz auf diejenige Frequenz verschoben wird, bei der eine maximale Last bzw. Leistungsaufnahme gemessen wird.

8. Verfahren nach einem der Ansprüche 1 bis 5, **dadurch gekennzeichnet, dass** zwischen mindestens drei unterschiedlichen Frequenzen zur Ermittlung der optimalen Resonanzfrequenz umgeschaltet wird, wobei die drei unterschiedlichen Frequenzen durch die momentane Frequenz, die momentane Frequenz plus eine Delta-Frequenzveränderung und die momentane Frequenz minus eine Delta-Frequenzveränderung gebildet werden.

9. Verfahren nach Anspruch 2, **dadurch gekennzeichnet, dass** der sekundärseitige Abstimmungsvorgang mittels eines durch eine MCU gesteuerten sekundärseitig angeordneten AFEs (Analog Front End) erfolgt.

10. Verfahren nach Anspruch 2 oder 9, **dadurch gekennzeichnet, dass** eine MCU einen digital einstellbaren Widerstand, einen digital einstellbaren Kondensator, und/oder analoge Schalter mit Widerständen und/ oder Kondensatoren einer AFE regelt.

11. Verfahren nach einem der Ansprüche 1 bis 10 **dadurch gekennzeichnet, dass** jeweils eine MCU die Primärseite und eine weitere MCU die Sekundärseite kontrolliert und regelt.
